# FASCICULE DE BREVET EUROPEEN

(11) **EP 2 544 871 B1**
(45) Date de publication et mention de la délivrance du brevet: **16.07.2014**
(21) Numéro de dépôt: 11712942.9
(22) Date de dépôt: 01.03.2011
(51) Int. Cl.: B29C 47/02

(54) **INSTALLATION D'EXTRUSION D'UNE GAINE EN MATIERE PLASTIQUE**
ANLAGE ZUR EXTRUDIERUNG VON KUNSTSTOFFHÜLSEN
FACILITY FOR EXTRUDING PLASTIC SHEATH

(30) Priorité: 09.03.2010 FR 1051704
(43) Date de publication de la demande: 16.01.2013
(73) Titulaire: Technip France, 92400 Courbevoix (FR)
(72) Inventeur: GUIGNON, Mickaël, F-76480 Roumare (FR); MORAND, Michel, F-76480 Duclair (FR)
(74) Mandataire: Bertrand, Didier
(86) Numéro de dépôt international: PCT/FR2011/050421
(87) Numéro de publication internationale: WO 2011/110770

(56) Documents cités:
- FR-A1- 2 931 099
- GB-A- 1 591 317
- US-A- 5 775 378

## Description

La présente invention se rapporte à une installation d'extrusion d'une gaine en matière plastique autour d'une structure tubulaire.

Un domaine d'application envisagé est notamment celui des conduites pétrolières flexibles comprenant au moins une gaine polymérique. Ces conduites flexibles sont avantageusement du type non lié et décrites dans les documents normatifs de l'Américan Petroleum Institute, API 17J et API RP 17B.

Le document FR 2 931 099 décrit une installation d'extrusion selon le préambule de la revendication 1.

Des installations connues permettent de recouvrir des objets cylindriques longitudinaux d'une gaine en matière plastique. Ces installations comprennent une extrudeuse à vis et une tête d'extrusion annulaire que traverse l'objet cylindrique longitudinal à recouvrir. En amont de l'extrudeuse à vis, un matériau plastique sous forme de granules est stocké par exemple dans une trémie pour être ensuite injecté dans une extrudeuse à vis. Dans l'extrudeuse à vis régulée thermiquement, le matériau plastique est ramolli et/ou fondu sous l'effet du cisaillement et de la chaleur à mesure qu'il est entraîné en translation à l'intérieur de la vis de l'extrudeuse vers la tête d'extrusion. A l'extrémité avale de l'extrudeuse, le matériau est transformé en une phase homogène visqueuse. De nombreux matériaux thermoplastiques, par exemple les PVC (polyvinyle chlorures) ou les polyéthylènes peuvent être ainsi transformés dans ces installations pour recouvrir des objets longitudinaux. Quant à la tête d'extrusion, elle comprend un mandrin coiffé d'un corps sensiblement cylindrique formant fourreau ou chemise, pour former une chambre annulaire entre la paroi interne dudit corps et ledit mandrin. La chambre annulaire présente une partie amont dans laquelle le corps et le mandrin sont reliés ensemble et à l'opposé, une partie aval prolongée par un outillage constituant une paire de lèvres circulaires qui débouche à l'extérieur de la tête d'extrusion. Différents mandrins sont envisageables pour réaliser ces gaines ou ces tubes, et on préfère généralement utiliser des mandrins de type « porte manteau », « coat-hanger » en langue anglaise, ou « queue de carpe », « fish tail ». La tête d'extrusion comprend alors une ouverture d'entrée, raccordée à l'extrudeuse à vis pour injecter ledit matériau plastique ramolli et/ou fondu à l'intérieur de la partie amont et ce type de mandrins comporte des canaux de répartition symétriques qui divergent à partir du point d'injection du polymère ramolli dans la tête d'équerre et se rejoignent le long de la génératrice diamétralement opposée à ce point d'injection. Le matériau plastique ramolli est alors apte à s'écouler dans la partie amont en formant une pluralité d'écoulements de matériau plastique ramolli. Ainsi, les écoulements se rejoignent dans ladite partie aval selon des zones de jonction, de manière à préformer une manche de matériau plastique ramolli, laquelle présente des surfaces de ressoudure correspondant auxdites zones de jonction.

Dans le cas des mandrins de type « porte-manteau » ou « queue de carpe », les deux demi-flux de matière ramollie s'écoulant dans les deux canaux de répartition diamétralement opposés, se rejoignent et se soudent après avoir chacun parcouru, en sens opposés, un demi-tour du mandrin générant une surface de ressoudure dans l'épaisseur de la gaine et qui forme une ligne apparente au niveau de la génératrice diamétralement opposée du point d'injection. Les canaux de répartition ne forment pas une chambre étanche, de sorte qu'une fraction de la matière fondue s'échappe des canaux de répartition et s'écoule en aval du mandrin selon des lignes de fuite sensiblement parallèle à l'axe principal du mandrin. Ainsi, dans un mandrin de type « porte manteau » ou « queue de carpe », outre les deux écoulements principaux correspondant aux canaux de répartition, une multitude de petits écoulements est générée en aval du mandrin.

Or, des défauts d'extrusion peuvent apparaitre, notamment, des sous épaisseurs. En effet, la gaine peut présenter localement des variations d'épaisseur.

Aussi, un problème qui se pose et que vise à résoudre la présente invention, est de fournir une installation d'extrusion d'une gaine en matière plastique qui ne présente pas le problème susmentionné.

Dans ce but, la présente invention propose une installation d'extrusion d'une gaine en matière plastique autour d'une structure tubulaire, ladite installation comprenant une vis d'extrusion apte à fournir un matériau plastique visqueux ramolli à chaud et une tête d'extrusion, ladite tête d'extrusion comprenant une chambre annulaire présentant une ouverture d'entrée apte à recevoir ledit matériau plastique visqueux et à l'opposé une sortie circulaire, ladite tête d'extrusion comprenant une pluralité de canaux ménagés à l'intérieur de ladite chambre annulaire pour d'une part former une pluralité d'écoulements de matériau plastique visqueux et d'autre part, faire converger lesdits écoulements les uns vers les autres dans des zones de jonction situées à l'intérieur de ladite chambre annulaire de manière à former une manche de matériau plastique visqueux, ladite manche de matériau plastique visqueux étant apte à s'écouler à travers ladite sortie circulaire pour former ladite gaine en matière plastique, ladite structure tubulaire étant apte à être enfilée à travers ladite tête d'extrusion pour recevoir ladite gaine en matière plastique. Selon l'invention, ledit matériau plastique visqueux fourni par ladite vis d'extrusion présentant à température constante une viscosité apte à évoluer d'une valeur µᵢ à une valeur constante µ_{cst} durant une période donnée, µ_{cst} > µᵢ, ladite installation comprend en outre une chambre tampon installée entre ladite vis d'extrusion et ladite tête d'extrusion pour stocker ledit matériau plastique visqueux pendant ladite période donnée et pour lui permettre d'atteindre ladite valeur de viscosité µ_{cst} avant l'injection à l'intérieur de ladite tête d'extrusion, par quoi lesdits écoulements de matériau plastique visqueux se rejoignent dans lesdites zones de jonction en formant une seule phase homogène.

Ainsi, un objet de l'invention est d'avoir mis en évidence que les propriétés intrinsèques du matériau plastique évoluaient durant son cheminement entre la vis d'extrusion et la sortie circulaire de la tête d'extrusion, et qu'en particulier, la viscosité apparente à température constante, augmentait en fonction du temps. Plus précisément, il a été mis en évidence que la viscosité apparente µᵢ, du matériau plastique visqueux une fois formé en une seule phase, progressait dans le temps sur une échelle de l'ordre de la dizaine de minutes, pour se stabiliser ensuite à une viscosité apparente µ_{cst} sensiblement constante. Ainsi, la viscosité apparente du matériau plastique visqueux qui s'écoule dans la chambre annulaire évolue-t-elle différemment selon le cheminement de ladite pluralité d'écoulements, le temps de séjour de la matière plastique variant selon le chemin d'écoulement. Il est en effet plus long au niveau du canal de répartition). De la sorte, la viscosité de la matière fondue de ces différents flux de matière varie et par voie de conséquence ces différents écoulements ne s'écoulent pas de manière homogène, la manche de matière plastique ainsi formée présente alors des défauts sous la forme de sous épaisseurs. Ces défauts de surface résultent directement d'une mauvaise répartition de la matière dans le mandrin causé par une remontée en viscosité de la matière plastique visqueuse des différents écoulements dans le mandrin disparate selon le chemin d'écoulement emprunté par la matière.

Aussi, après avoir mis en évidence l'évolution de la viscosité apparente du matériau plastique visqueux durant l'extrusion, une caractéristique de l'invention a résidé dans la mise en oeuvre d'une chambre tampon, entre la vis d'extrusion et la tête d'extrusion, permettant au matériau plastique visqueux d'atteindre sa valeur constante µ_{cst} de viscosité apparente, avant d'être injecté dans la tête d'extrusion. De la sorte, le matériau plastique visqueux stabilisé, peut être divisé en une pluralité d'écoulements qui en se rejoignant forme une seule phase homogène sans variation de viscosité entre les différents petits flux de matière durant leur écoulement sur le mandrin. En conséquence, les propriétés mécaniques de la gaine en matière plastique ainsi réalisée seront uniformes dans toute la circonférence de la gaine sans sous-épaisseur locale.

Avantageusement, ladite chambre tampon comprend un tronçon de symétrie cylindrique, de manière à ne pas augmenter considérablement les pertes de charges occasionnées par la mise en oeuvre de la chambre tampon. En effet, les pertes de charges nécessitent d'être compensées par l'énergie mécanique apportée pour entraîner le matériau plastique visqueux à l'intérieur de la vis d'extrusion. Préférentiellement, ladite vis d'extrusion s'étendant longitudinalement, ledit tronçon de symétrie cylindrique s'étend dans le prolongement de ladite vis d'extrusion pour contribuer à diminuer ces pertes de charges.

Par ailleurs, selon un autre mode de mise en oeuvre de l'invention particulièrement avantageux, ladite chambre tampon comprend en outre un autre tronçon de symétrie cylindrique relié audit un tronçon par une manchette en U de façon à installer lesdits tronçons sensiblement parallèlement entre eux. Ainsi, une telle configuration permet d'obtenir un écoulement de section relativement faible par rapport à la longueur totale des deux tronçons, et ce pour un volume donné, ce qui statistiquement, assure un temps de séjour suffisant pour toutes les portions de matériau plastique visqueux qui circulent à l'intérieur de la chambre tampon. À l'inverse, si la chambre tampon était sphérique, un chemin de passage privilégié s'établirait entre la sortie de la vis extrusion et l'ouverture d'entrée de ladite chambre annulaire, et le temps de séjour du matériau plastique visqueux qui s'écoulerait à travers ce chemin de passage privilégié ne serait pas suffisant pour atteindre la viscosité apparente constante µ_{cst}. Par ailleurs, une telle disposition des tronçons limite l'espace nécessaire pour mettre en place la chambre tampon, entre la vis extrusion et la tête d'extrusion. Aussi, la chambre tampon selon l'invention, peut être aisément mise en oeuvre sur une installation d'extrusion conforme à l'art antérieur, sans modification importante de structure.

Selon une variante de réalisation de l'invention particulièrement avantageuse, ledit tronçon comporte des chicanes pour perturber l'écoulement dudit matériau plastique visqueux ramolli à chaud à l'intérieur de ladite chambre tampon, et ainsi homogénéiser le matériau plastique visqueux. De la sorte, si le matériau plastique visqueux présentait des viscosités apparentes différentes, selon une section droite du tronçon, cette différence s'estomperait au fur et à mesure de l'écoulement du matériau dans le tronçon avant qu'il ne s'écoule dans la chambre annulaire. Avantageusement, lesdites chicanes comprennent des bagues équipées de déflecteurs montés à l'intérieur desdites bagues. De la sorte, les différentes bagues accolées successivement les unes aux autres peuvent être portées dans des positions angulaires déterminer pour perturber plus ou moins l'écoulement du matériau plastique visqueux.

Selon un mode de réalisation particulier, lesdits déflecteurs présentent des montants sensiblement perpendiculaires à l'axe desdites bagues et des traverses solidaires desdits montants en formant grilles, de manière à diviser l'écoulement de matériau plastique ramolli visqueux en sortie de vis d'extrusion, pour augmenter son homogénéisation. Par exemple, lesdites traverses sont montées sensiblement perpendiculairement auxdits montants et inclinées par rapport à l'axe desdites bagues.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique d'une installation d'extrusion conforme à l'invention selon une première variante d'exécution ;
- la Figure 2 est un graphique illustrant les propriétés de matériaux plastiques aptes à être utilisés dans l'installation d'extrusion représentée sur la Figure 1 ;et,
- la Figure 3 est une vue schématique d'une installation d'extrusion conforme à l'invention selon une seconde variante d'exécution.

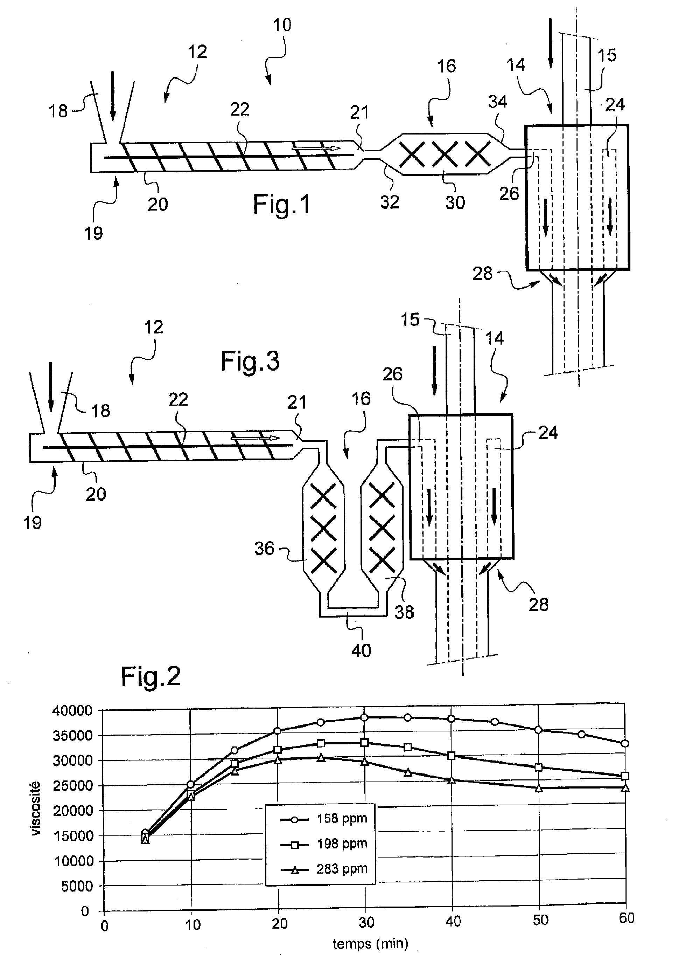

La Figure 1 illustre une installation d'extrusion 10 selon l'invention comportant en amont une vis d'extrusion 12, en aval une tête d'extrusion 14 traversée par une structure tubulaire 15 à recouvrir, et entre les deux, une chambre tampon 16. Le domaine d'application de ces installations est celui des conduites pétrolières flexibles, lesquelles comprennent une alternance de couches métalliques et de couches en matière plastique. L'installation d'extrusion 10 permet ainsi de former des gaines polymériques, ou en matière plastique, et de les extruder directement sur la structure tubulaire 15. Cette solution éprouvée permet à la fois de réaliser des tubes, ou gaines, destinés à constituer par exemple, une gaine de protection des conduites pétrolières par exemple la gaine de pression ou bien une gaine externe.

La vis d'extrusion 12 présente une trémie 18 débouchant dans une extrémité d'entrée 19 d'un fourreau 20. La trémie 18 permet de stocker un matériau plastique sous forme pulvérulente. Le fourreau 20 est de symétrie cylindrique de révolution et il s'étend longitudinalement entre ladite extrémité d'entrée 19 et une extrémité de sortie 21. En outre, il est équipé de jaquettes chauffantes non représentées, aptes à être alimentées en courant électrique, pour fournir de l'énergie thermique à l'intérieur du fourreau. Au surplus, le fourreau est équipé d'une vis sans fin 22, de type vis d'Archimède, pour entraîner le matériau plastique de la trémie 18 vers la chambre tampon 16. Dans la vis d'extrusion 12, le matériau plastique sous forme solide au niveau de la trémie 18, est petit à petit ramolli et/ou fondu et aggloméré à une température comprise entre 200 °C et 300 °C, pour former une seule phase d'un matériau plastique visqueux.

La quantité de matériau plastique transformée et véhiculée à l'intérieur du fourreau 20 dépend bien évidemment des dimensions de la vis d'extrusion 12, mais pour une installation donnée elle est déterminée par la vitesse de rotation de la vis d'Archimède 22. Aussi, la quantité d'énergie fournie par les jaquettes chauffantes est ajustée en fonction de cette vitesse de rotation de la vis d'Archimède 22 pour obtenir un même état du matériau plastique ramolli visqueux. L'installation d'extrusion ici décrite permet d'obtenir un débit de matériau plastique de type polyamide, par exemple de 690 kg par heure pour une vitesse de rotation de 30 tr/m et une température du matériau comprise entre 230 °C et 250 °C.

S'agissant de la tête d'extrusion 14, elle comprend à l'intérieur une chambre annulaire 24, laquelle présente à une extrémité, une ouverture d'entrée 26, et à l'autre extrémité une sortie circulaire 28 formée par deux lèvres concentriques. Cette chambre annulaire 24 est formée par un mandrin interne, coiffé coaxialement d'une structure conique externe. La chambre annulaire 24 est définie entre le mandrin et la structure cylindrique externe. La structure tubulaire 15 traverse axialement la tête d'extrusion 14 et la sortie circulaire 28.

Les matériaux plastiques utilisés sont choisis en fonction des températures et des pressions d'utilisation de la conduite pétrolière flexible. Pour des températures par exemple inférieures à 60 °C, on utilisera comme matériau le polyéthylène haute densité communément dénommé PEHD. Lorsque la température d'utilisation est comprise entre 60 et 90 °C, on utilisera des polyamides, par exemple les polyamides 11 ou bien 12. Au-dessus de 90 °C le polyfluorure de vinylidène, ou PVDF est, plus indiqué.

Les polyamides sont des matériaux plastiques avantageux en ce qu'ils présentent une meilleure tenue à la fatigue. Cependant, il a été observé que la viscosité apparente du polyamide 11, n'était pas constante durant son cheminement dans la vis extrusion 12 et dans la tête d'extrusion 14, et c'est là le mérite de l'invention. On se reportera sur la Figure 2 illustrant l'évolution de la viscosité apparente µᵢ en fonction du temps du polyamide 11 ramolli à une température de 230 °C. Une mesure de cette viscosité peut être obtenue en enregistrant le poids de polymère ramolli à 230 °C qui s'écoule à travers un orifice calibré pendant une durée prédéfinie. Au surplus, cette viscosité apparente µᵢ évolue selon un même profil mais avec des amplitudes différentes en fonction de la teneur en eau du polyamide. Les trois courbes illustrées sur la Figure 2, correspondent à la variation de viscosité en fonction du temps pour un matériau polyamide 11 présentant trois taux d'humidité différents. Ainsi, on observe tout d'abord une forte variation de viscosité apparente dans les 20 premières minutes où la viscosité croit en moyenne de 1000 Pa.s par minute, et ensuite une relative stagnation de la viscosité apparente. En outre, on observe qu'au bout de 20 minutes, le polyamide chargé en eau à hauteur de 283 ppm, présente une viscosité de 30 000 Pa.s, tandis que le polyamide chargé à hauteur de 158 ppm présente lui, une viscosité voisine de 35 000 Pa.s. Ces dernières observations révèlent l'importance du contrôle du taux d'humidité du matériau plastique.

Révélant cette forte croissance de la viscosité apparente dans les premières minutes de mise en oeuvre du polyamide 11 dans un état ramolli et visqueux, et attribuant les défauts rencontrés sur les gaines en matière plastique produites selon l'art antérieur, à cette variation des propriétés intrinsèques du matériau plastique durant l'extrusion, il a été imaginé de retarder l'injection du matériau plastique visqueux ramolli à l'intérieur de la tête d'extrusion 14 en l'accumulant d'abord dans la chambre tampon 16 afin de lui laisser le temps d'atteindre son plateau de viscosité apparente. Ainsi, le matériau plastique n'évoluant que très faiblement en terme de viscosité à l'intérieur de la tête d'extrusion 14 et plus précisément de la chambre annulaire 24, il apparaît que les gaines ainsi extrudées ne présentent plus aucun défaut de surface et notamment aucune variation d'épaisseur de la gaine. En effet, lorsque que le matériau plastique est injecté au niveau de l'ouverture d'entrée 26, il se divise à travers des canaux d'écoulement autour du mandrin, en une pluralité d'écoulements pour former une manche. Lorsque la viscosité du matériau plastique est constante durant son cheminement à l'intérieur de la chambre annulaire 24, d'une part les vitesses d'écoulement à travers les canaux sont relativement similaires, et d'autre part les écoulements, lorsqu'ils forment plus aisément une seule et même phase homogène.

Selon une première variante d'exécution telle que représentée sur la Figure 1, la chambre tampon 16 comprend un tronçon 30 de symétrie cylindrique de révolution, et deux extrémités tronconiques 32, 34, l'une 32 raccordée à l'extrémité de sortie 21 du fourreau 20, l'autre 34 raccordée à la tête d'extrusion 14 au niveau de l'ouverture d'entrée 26 de la chambre annulaire 24. Le tronçon 30 s'étend longitudinalement dans le prolongement du fourreau 20 sensiblement coaxialement.

Selon un mode de mise en oeuvre, le débit du matériau plastique ramolli visqueux, un polyamide 11, est de 690 kg par heure, tandis que sa température est portée à 250 °C. Dans ces conditions, le matériau atteint une viscosité constante µ_{cst} au bout de 350 secondes. Or, sur une installation d'extrusion classique, au bout de 350 secondes, le matériau visqueux est déjà injecté dans la tête d'extrusion 14. Aussi, il est prévu une chambre tampon 16 de 28 000 cm³ de manière à ce que le temps de séjour du matériau, à partir de l'instant où il est ramolli à la température de 250 °C et jusqu'à l'instant où il est injecté à travers l'ouverture d'entrée 26 de la chambre annulaire 24, soit de 350 secondes. De la sorte, la viscosité apparente du polyamide n'évolue plus à l'intérieur de la chambre 24 et conséquemment, la gaine alors extrudée ne présente aucune variation d'épaisseurs.

Par ailleurs, selon un mode de mise en oeuvre de l'invention non représenté, la chambre tampon 16 comporte une série de bagues munies de déflecteurs à l'intérieur, et successivement enfilées à l'intérieur du tronçon 30. Aussi, grâce à ces déflecteurs formant chicane, le polyamide ramolli visqueux, se divise à l'intérieur de la chambre tampon 16 en une pluralité d'écoulements qui se rejoignent ensuite et concourent à l'homogénéisation du matériau. De la sorte, les effets de bord, qui provoquent une diminution des vitesses du matériau aux parois, sont éliminés, et sa viscosité en sortie de la chambre tampon 16 est encore plus homogène. Lesdits déflecteurs présentent par exemple des montants sensiblement perpendiculaires à l'axe desdites bagues et qui s'étendent à l'intérieur de la bague entre deux bords opposés, tandis que des traverses sont solidaires desdits montants et s'étendent perpendiculairement en formant grilles. En outre, lesdites traverses sont montées inclinées par rapport à l'axe desdites bagues pour augmenter encore l'homogénéisation du matériau.

Selon une seconde variante d'exécution telle que représentée sur la Figure 3, où l'on retrouve tous les éléments décrits sur la Figure 1, sous leur même forme, excepté la chambre tampon 16, laquelle comporte deux demi-tronçons 36, 38 montés parallèlement entre eux et raccordés ensemble par une manchette en U 40. Un premier demi-tronçon 36 est lui raccordé à l'extrémité de sortie 21 du fourreau 20, tandis que l'autre demi-tronçon 38 débouche dans l'ouverture d'entrée 26 de la chambre annulaire 24.

Une telle variante d'exécution, permet d'augmenter, le cas échéant, le volume de la chambre tampon 16 sans toutefois modifier substantiellement la position relative de la vis d'extrusion 12 et de la tête d'extrusion 14. Au surplus, les deux demi-tronçons 36, 38 peuvent également être équipés des bagues du type précité formant chicane.

## Revendications

1. Installation d'extrusion (10) d'une gaine en matière plastique autour d'une structure tubulaire (15), ladite installation comprenant une vis d'extrusion (12) apte à fournir un matériau plastique visqueux ramolli à chaud et une tête d'extrusion (14), ladite tête d'extrusion comprenant une chambre annulaire (24) présentant une ouverture d'entrée (26) apte à recevoir ledit matériau plastique visqueux et à l'opposé une sortie circulaire (28), ladite tête d'extrusion comprenant une pluralité de canaux ménagés à l'intérieur de ladite chambre annulaire(24) pour d'une part former une pluralité d'écoulements de matériau plastique visqueux et d'autre part, faire converger lesdits écoulements les uns vers les autres dans des zones de jonction situées à l'intérieur de ladite chambre annulaire de manière à former une manche de matériau plastique visqueux, ladite manche de matériau plastique visqueux étant apte à s'écouler à travers ladite sortie circulaire (28) pour former ladite gaine en matière plastique, ladite structure tubulaire (15) étant apte à être enfilée à travers ladite tête d'extrusion (15) pour recevoir ladite gaine en matière plastique ;
**caractérisée en ce que**, ledit matériau plastique visqueux fourni par ladite vis d'extrusion présentant à température constante une viscosité apte à évoluer d'une valeur µᵢ à une valeur constante µ_{cst} durant une période donnée, µ_{cst} > µᵢ, ladite installation comprend en outre une chambre tampon (16) installée entre ladite vis d'extrusion(12) et ladite tête d'extrusion (14) pour stocker ledit matériau plastique visqueux pendant ladite période donnée et pour lui permettre d'atteindre ladite valeur de viscosité µ_{cst} avant l'injection à l'intérieur de ladite tête d'extrusion (14), par quoi lesdits écoulements de matériau plastique visqueux se rejoignent dans lesdites zones de jonction en formant une seule phase homogène.

2. Installation d'extrusion selon la revendication 1, **caractérisée en ce que** ladite chambre tampon (16) comprend un tronçon de symétrie cylindrique (30).

3. Installation d'extrusion selon la revendication 2, **caractérisée en ce que**, ladite vis d'extrusion (12) s'étendant longitudinalement, ledit tronçon de symétrie cylindrique (30) s'étend dans le prolongement de ladite vis d'extrusion.

4. Installation d'extrusion selon la revendication 2, **caractérisée en ce que** ladite chambre tampon (16) comprend en outre un autre tronçon de symétrie cylindrique (36, 38) relié audit un tronçon par une manchette en U (40) de façon à installer lesdits tronçons sensiblement parallèlement entre eux.

5. Installation d'extrusion selon l'une quelconque des revendications 2 à 4, **caractérisée en ce que** ledit tronçon (30, 36, 38) comporte des chicanes pour perturber l'écoulement dudit matériau plastique visqueux ramolli à chaud à l'intérieur de ladite chambre tampon (16).

6. Installation d'extrusion selon la revendication 5, **caractérisée en ce que** lesdites chicanes comprennent des bagues équipées de déflecteurs montés à l'intérieur desdites bagues.

7. Installation d'extrusion selon la revendication 6, **caractérisée en ce que** lesdits déflecteurs présentent des montants sensiblement perpendiculaires à l'axe desdites bagues et des traverses solidaires desdits montants en formant grilles.

8. Installation d'extrusion selon la revendication 7, **caractérisée en ce que** lesdites traverses sont montées sensiblement perpendiculairement auxdits montants et inclinées par rapport à l'axe desdites bagues.

## Patentansprüche

1. Anlage zum Extrudieren (10) einer Umhüllung aus Kunststoff um eine rohrförmige Struktur (15), wobei die Anlage eine Extruderschnecke (12) umfasst, die dafür ausgelegt ist, ein heiß plastifiziertes, zähflüssiges Kunststoffmaterial bereitzustellen, und einen Extruderkopf (14) umfasst, wobei der Extruderkopf eine ringförmige Kammer (24) mit einer Einlassöffnung (26) für die Aufnahme des zähflüssigen Kunststoffmaterials umfasst, die einem kreisförmigen Auslass (28) entgegengesetzt ist, wobei der Extruderkopf eine Vielzahl von Kanälen umfasst, die im Inneren der ringförmigen Kammer (24) angeordnet sind, um einerseits eine Vielzahl von Strömen des zähflüssigen Kunststoffmaterials zu bilden, und um andererseits die Ströme zueinander hin in Verbindungszonen konvergieren zu lassen, die sich im Inneren der ringförmigen Kammer befinden, derart, dass ein Schlauch aus zähflüssigem Kunststoffmaterial gebildet wird, wobei der Schlauch aus zähflüssigem Kunststoffmaterial dafür ausgelegt ist, durch den kreisförmigen Auslass (28) hindurch zu fließen, um die Umhüllung aus Kunststoff zu bilden, wobei die rohrförmige Struktur (15) dafür ausgelegt ist, durch den Extruderkopf (15) hindurch eingesteckt zu werden, um die Umhüllung aus Kunststoff aufzunehmen;
**dadurch gekennzeichnet, dass**, da das zähflüssige Kunststoffmaterial, das durch die Extruderschnecke bereitgestellt wird, bei einer konstanten Temperatur eine Viskosität aufweist, die sich über einen gegebenen Zeitraum von einem Wert µᵢ zu einem konstanten Wert µ_{cst} entwickeln kann, µ_{cst} > µᵢ, die Anlage ferner eine Pufferkammer (16) umfasst, die zwischen der Extruderschnecke (12) und dem Extruderkopf (14) installiert ist, um das zähflüssige Kunststoffmaterial während des gegebenen Zeitraums zu bevorraten und um ihm zu ermöglichen, vor dem Einspritzen in das Innere des Extruderkopfes (14) den Viskositätswert µ_{cst} zu erreichen, wodurch die Ströme des zähflüssigen Kunststoffmaterials in den Verbindungszonen aufeinandertreffen, wodurch sie eine einzige homogene Phase bilden.

2. Extruderanlage nach Anspruch 1, **dadurch gekennzeichnet, dass** die Pufferkammer (16) einen Abschnitt zylindrischer Symmetrie (30) umfasst.

3. Extruderanlage nach Anspruch 2, **dadurch gekennzeichnet, dass**, da sich die Extruderschnecke (12) in Längsrichtung erstreckt, der Abschnitt zylindrischer Symmetrie (30) sich in der Verlängerung der Extruderschnecke erstreckt.

4. Extruderanlage nach Anspruch 2, **dadurch gekennzeichnet, dass** die Pufferkammer (16) ferner einen weiteren Abschnitt zylindrischer Symmetrie (36, 38) umfasst, der mit dem einen Abschnitt durch eine U-förmige Manschette (40) verbunden ist, derart, dass die Abschnitte im Wesentlichen parallel zueinander installiert sind.

5. Extruderanlage nach einem der Ansprüche 2 bis 4, **dadurch gekennzeichnet, dass** der Abschnitt (30, 36, 38) Leitbleche aufweist, um den Strom des heiß plastifizierten, zähflüssigen Kunststoffmaterials im Inneren der Pufferkammer (16) zu stören.

6. Extruderanlage nach Anspruch 5, **dadurch gekennzeichnet, dass** die Leitbleche Ringe umfassen, die mit Ablenkmitteln versehen sind, die im Inneren der Ringe montiert sind.

7. Extruderanlage nach Anspruch 6, **dadurch gekennzeichnet, dass** die Ablenkmittel Holme aufweisen, die zu der Achse der Ringe im Wesentlichen senkrecht sind, und Querleisten auweisen, die mit den Holmen fest verbunden sind, wodurch sie Gitter bilden.

8. Extruderanlage nach Anspruch 7, **dadurch gekennzeichnet, dass** die Querleisten im Wesentlichen senkrecht zu den Holmen montiert und relativ zu der Achse der Ringe geneigt sind.

## Claims

1. An extrusion facility (10) for extruding a plastic sheath around a tubular structure (15), said facility comprising an extrusion screw (12) able to supply a hot softened viscous plastic and an extrusion head (14), said extrusion head comprising an annular chamber (24) having an inlet opening (26) able to receive said viscous plastic and, opposite, a circular outlet (28), said extrusion head comprising a plurality of passages formed within said annular chamber (24) in order, on the one hand, to form a plurality of flows of viscous plastic and, on the other hand, to cause said flows to converge toward one another in junction zones situated inside said annular chamber so as to form a sleeve of viscous plastic, said sleeve of viscous plastic being able to flow through said circular outlet (28) to form said plastic sheath, said tubular structure (15) being able to be passed through said extrusion head (15) in order to receive said plastic sheath;
**characterized in that**, with said viscous plastic supplied by said extrusion screw having, at constant temperature, a viscosity that is liable to change from a value µᵢ to a constant value µ_{cst} during a given period, µ_{cst} > µᵢ, said facility further comprises a buffer chamber (16) installed between said extrusion screw (12) and said extrusion head (14) to store said viscous plastic for said given period and allow it to reach said viscosity value µ_{cst} before it is injected into said extrusion head (14), through the agency of which said flows of viscous plastic meet in said junction zones to form a single homogeneous phase.

2. The extrusion facility as claimed in claim 1, **characterized in that** said buffer chamber (16) comprises a portion of cylindrical symmetry (30).

3. The extrusion facility as claimed in claim 2, **characterized in that**, with said extrusion screw (12) extending longitudinally, said portion of cylindrical symmetry (30) extends in the continuation of said extrusion screw.

4. The extrusion facility as claimed in claim 2, **characterized in that** said buffer chamber (16) further comprises another portion of cylindrical symmetry (36, 38) connected to said one portion by a U-shaped spool piece (40) so that said portions can be installed substantially parallel to one another.

5. The extrusion facility as claimed in any one of claims 2 to 4, **characterized in that** said portion (30, 36, 38) comprises chicanes to disrupt the flow of said hot softened viscous plastic within said buffer chamber (16).

6. The extrusion facility as claimed in claim 5, **characterized in that** said chicanes comprise rings fitted with deflectors mounted inside said rings.

7. The extrusion facility as claimed in claim 6, **characterized in that** said deflectors have uprights substantially perpendicular to the axis of said rings and crossmembers secured to said uprights to form gratings.

8. The extrusion facility as claimed in claim 7, **characterized in that** said crossmembers are mounted substantially perpendicular to said uprights and at an angle with respect to the axis of said rings.
